# EUROPEAN PATENT APPLICATION

(11) **EP 1 906 672 A1**
(43) Date of publication of application: **02.04.2008**
(21) Application number: 06766920.0
(22) Date of filing: 19.06.2006
(51) Int. Cl.: H04N 7/30, H04N 1/41

(54) **IMAGE ENCODING DEVICE AND IMAGE ENCODING METHOD**

(30) Priority: 15.07.2005 JP 2005207605
(71) Applicant: MATSUSHITA ELECTRIC INDUSTRIAL CO., LTD., Osaka 571-8501 (JP)
(72) Inventor: KUROKI, Hideki c/o Matsushita Electric Industrial Co., Ltd., Chuo-ku Osaka-shi Osaka 540-6207 (JP)
(74) Representative: Pautex Schneider, Nicole Véronique
(86) International application number: PCT/JP2006/312256
(87) International publication number: WO 2007/010694

(57) **Abstract**

An image encoding device which performs a high-speed orthogonal transform process, and is compatible with various format structures and block size encoding specifications.

The image encoding device (1) including a first one-dimensional orthogonal transform processing unit (10), a two port memory for transposition processing (20), a second one-dimensional orthogonal transform processing unit (30), a first address generation unit (40), a second address generation unit (50), a coefficient table holding unit (60), a parameter set storage unit (70) and a control unit (80). The control unit controls said first (10) and said second orthogonal transform processing unit (30) to perform the one-dimensional transform processing in parallel for each block of the designated size, and to control said first (40) and said second address generation units (50) to supply an address which corresponds to the designated size in parallel with the two port memory for transposition processing (20).

## Description

### Technical Field

The present invention relates to an image encoding device and an image encoding method for encoding a moving picture or a still picture, and especially to technology for orthogonally transforming image data, which includes luminance elements and chrominance elements formed in a predetermined format, per block of a designated size.

### Background Art

Conventionally, there are MPEG moving image encoding standards such as MPEG 1, MPEG-2, MPEG-4 and H.264/AVC, which are defined by standards in order to be compatible with the image size and the medium employed. For example, MPEG-1/MPEG-2 is used for media with a relatively large image size such as a DVD, MPEG-4 is used for media with a comparatively small image size such as a cellular phone, and H.264/AVC is used for media with a markedly large image size such as an HDTV.

When a moving image is coded, the process is performed by dividing the moving image into processing segments known as macroblocks (MB). MBs are made up of luminance elements and chrominance elements, and generally in 4:2:0 format, there are four luminance elements Y0, Y1, Y2 and Y3, and two chrominance elements, Cb and Cr. Each Y and C element is made up of 64 pixel elements arranged in an 8 x 8 block. Orthogonal transform is a process common to MPEG-1, MPEG-2, MPEG-4 and the H.254/AVC. The orthogonal transform process is a process performed for each element Y0, Y1, Y2, Y3, Cb and Cr, and the image elements which have been orthogonally transformed from the image data have a bias in their value and take a format useful for compressing data. An integer accuracy discrete cosine transformation (DCT) is used in H.264 as the discrete cosine transformation for MPEG-1, MPEG-2 and MPEG-4.

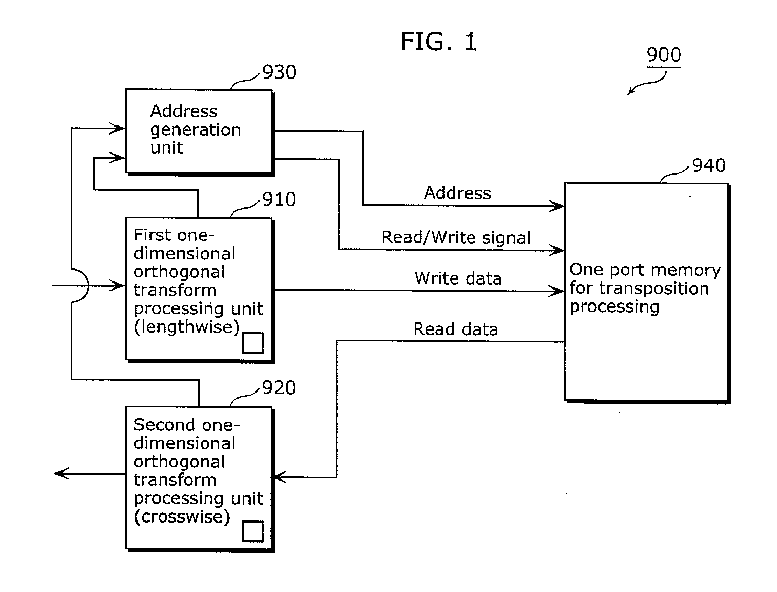

FIG. 1 shows a structure of the conventional image encoding device.

The image encoding device 900 performs a two-dimensional orthogonal transform process in MPEG moving picture encoding using the macroblock image data (Y0, Y1, Y2, Y3, Cb and Cr in the 4:2:0 format) as a basis, and as shown in FIG. 1, includes a first one-dimensional orthogonal transform processing unit 910, a second one-dimensional orthogonal transform processing unit 920, an address generation unit 930, one port memory 940 for transposition processing and so on.

The one-dimensional orthogonal transform processing unit 910 performs a one-dimensional orthogonal transform process vertically based on a coefficient table for an 8 x 8 block held in advance. Image elements for which the one-dimensional orthogonal transform process has finished are written into the one port memory 940 for transposition processing since transposition processing is performed for the image elements as necessary. At this time, the first one-dimensional orthogonal transform processing unit 910 communicates the processing state to the address generation unit 930. The address generation unit 930 exports a writing request signal and an address attached to the writing request signal to the one port memory 940 for transposition processing using the information about the processing state.

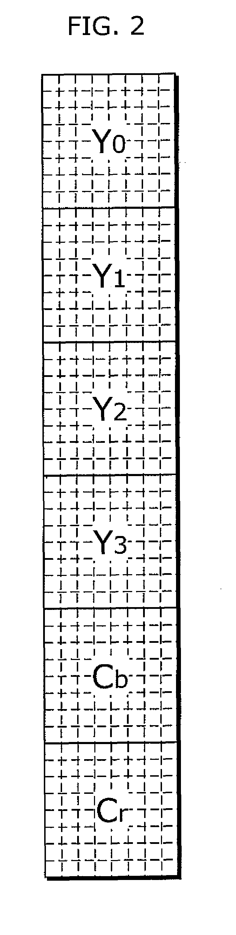

As shown in FIG. 2, the one port memory 940 for transposition processing has a storage area for recording six 8 x 8 blocks and records the Y0, Y1, Y2, Y3, Cb and Cr elements in each storage area according to a light signal and an address specification from the address generation unit 930.

After all of the image elements on which the one-dimensional orthogonal transform process has been performed vertically have been written into the one port memory 940 for transposition processing, one-dimensional orthogonal transform processing is performed horizontally by extracting image elements from the one port memory 940 for transposition processing since the one-dimensional orthogonal transform process is performed horizontally by a second one-dimensional orthogonal transform processing unit 920. Subsequently, the second one-dimensional orthogonal transform processing unit 920 communicates the processing state to the address generation unit 930. The address generation unit 930 outputs a reading request signal and an address attached to the reading request signal to the one port memory 940 for transposition processing 1 using the information.

In other words, when orthogonal transform processing is realized using moving picture encoding in the conventional image encoding device 900, the result of the vertical one-dimensional orthogonal transform process is processed by transposition processing and two-dimensional orthogonal transform processing is realized by performing one-dimensional orthogonal transform process horizontally on the transposed result. Additionally, each piece of image data (luminance/chrominance elements) is independent and for example the vertical one-dimensional orthogonal transform is completed for the Y0 element, and when the Y0 element is finished being written to the transposition memory, the one-dimensional orthogonal transform can be performed horizontally without waiting for another image data process.

In this way, in MPEG moving image encoding, the accuracy of data compression in the encoding processing increases by holding a bias for performing orthogonal transform processing which is an orthogonal transformation, the bias being a large value for low frequency elements and a small value for low frequency elements.
Non-Patent Document 1: "MPEG-4 no Subete" (Everything MPEG-4) by Sanki Sukekazu, Kogyochosakai (Industrial Survey Organization), January 20th 1999.
Non-Patent Document 2: "H.264/AVC kyoukasho" (H.264/AVC textbook) Okubo Sakae "Editorial supervision", Kadono Shinya, Kikuya Yoshihiro, Suzuki Akihiko (Co-editors), Impress August 11th, 2004.

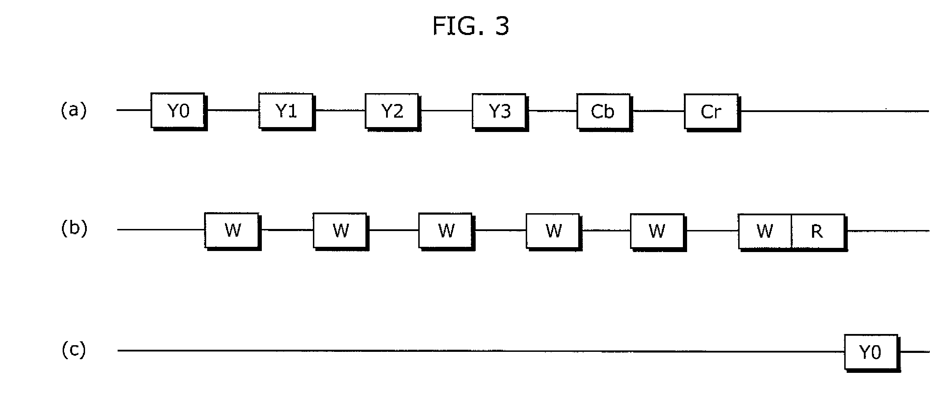

However, in the conventional image encoding device 900, the transposition processing memory has one port, and since the address generation unit can be used for both reading and writing, vertical one-dimensional orthogonal transform process is finished for all of the image data (Y0, Y1, Y2, Y3, Cb and Cr elements) in the macroblock. When writing to the transposition memory is not finished, the horizontal one-dimensional orthogonal transform process cannot be performed. In other words, as shown in FIG. 3(a), when the first one-dimensional orthogonal transform processing unit 910 performs the one-dimensional orthogonal transform process vertically on the (Y0, Y1, Y2, Y3, Cb and Cr elements) of the image data in the macroblock, the coefficient values are stored after being sequentially and inversely processed in each storage area of the address generation unit 930 (see FIG. 3(b)), and when vertical one-dimensional orthogonal transform process finishes vertically for all coefficient values and the coefficient values are written into the transposition memory, the coefficient values of the macroblock (Y0, Y1, Y2, Y3, Cb and Cr elements) are read out and the one-dimensional orthogonal transform process is performed horizontally for the coefficient values. Accordingly, the problem develops that the processing time necessary for two-dimensional orthogonal transform processing increases.

Additionally, since address management is performed on the macroblocks as a whole and not for each element in the image data within the macroblock, the amount of pixel data in each element which makes up the image data (format structure) is modified, flexibility decreases since the block size is modified and the moving image encoding method cannot accommodate the modification.

Plural and various image encoding processes for modern semiconductor integrated circuits are in demand, and a reduction in power consumption is also essential. In this environment, increases in processing time deteriorate the function ability of whole semiconductor integrated circuits and interfere with the performance of various image encoding processes. Additionally, increases in processing time tend to lengthen circuit processing and thus interfere with the reduction of power consumption since power consumption also increases. Additionally, various image encoding processes can no longer be performed when the amount of image data on which orthogonal transform processing is performed is fixed.

The present invention is realized in order to solve the above problems and takes as an object improving the functionality of the entire semiconductor integrated circuit, reducing power consumption by performing the orthogonal transform process at a high speed, and in addition making the image encoding device compatible with various encoding standards by varying the image data which makes up the image data on which the orthogonal transform processing is performed. In other words, the object of the present invention is to provide an image encoding device and an image encoding method compatible with various format configurations and block size encoding standards by speeding up the orthogonal transform process.

### Means to Solve the Problems

In order to accomplish the objects above, the image encoding device according to the present invention is an image encoding device which performs an orthogonal transform process, for each block of a designated size, on image data which includes luminance elements and chrominance elements formed in a predetermined format, the image encoding device comprising: a coefficient table holding unit which holds a coefficient table in advance for each predetermined block size; a first orthogonal transform processing unit which performs a one-dimensional orthogonal transform process vertically on each block of the data, which includes the luminance elements and the chrominance elements, based on the coefficient table corresponding to the designated block size; a data transposition process memory which includes a storage area in which can be recorded in two blocks a coefficient value for the largest block on which the one-dimensional orthogonal transform process is performed by the first orthogonal transform processing unit; a first address generation unit which generates an address in the data transposition process memory such that the coefficient value of a designated size on which the one-dimensional orthogonal transform process has been performed by the first orthogonal transform processing unit is transposed and recorded into one of the storage areas; a second address generation unit which generates an address in the data transposition process memory in order to read out the coefficient value of the designated size stored in one of the storage areas of the data transposition process memory; a second orthogonal transform processing unit which performs a one-dimensional orthogonal transform process horizontally on the coefficient value of the designated size, read out of the data transposition process memory, based on the coefficient table corresponding to the designated block size; and a control unit which controls the first and the second orthogonal transform processing unit to perform the one-dimensional transform processing in parallel for each block of the designated size, and to control the first and the second address generation units to supply an address which corresponds to the designated size in parallel with the data transposition process memory.

Thus, control of writing to the memory for transposition processing in the result processed by the first orthogonal transform processing unit and control of read-out from the memory for transposition processing to the second orthogonal transform processing unit can be performed by the first address generation unit in parallel. As a result, the one-dimensional orthogonal transform processing can be performed horizontally for each block of the designated size, in a pipeline without waiting for all image data in the macroblock for which the one-dimensional orthogonal transform process has finished vertically (Y0, Y1, Y2, Y3, Cb and Cr elements) to finish the one-dimensional orthogonal transform process vertically in sequence.

In other words, since all image data in the macroblock can be pipeline processed on an image data basis, the processing time for the orthogonal processing can be shortened. Additionally, since address generation by the first address generation unit and the second address generation unit, orthogonal transform processing and image data which includes the luminance elements and the chrominance elements are managed for each block of the designated size, the processing can be performed even when the number of pixels in the pixel data which makes up the image data.

Additionally, the read out process to the transposition memory performed by the control unit can be controlled so as not to pass the writing process.

Thus, processing in the one-dimensional transform process in the first orthogonal transform processing unit is delayed for some reason, and even when there is the situation that one-dimensional orthogonal trnasform processing cannot be performed horizontally, discordance between the first and the second orthogonal processing unit can be prevented by stopping read-out control from a two port memory for transposition processing.

Additionally, in the image encoding device according to the present invention, a coefficient corresponding to each standard is stored respectively in advance in the coefficient table for each predetermined size of the coefficient table holding unit and the first and second one-dimensional orthogonal transform processing units can use a coefficient matched to a predetermined standard.

Thus, by replacing a coefficient in the coefficient table, DCT in a variety of specifications and other orthogonal transformations can be processed.

Note that the present invention cannot only be implemented as an image encoding device but may also be implemented as an image encoding method in which the characteristic units of the image encoding device are implemented as steps, and as a program which executes these steps in a computer. Additionally, it goes without saying that such a program can be distributed through a recording medium such as a CD-ROM or a communication medium such as the internet.

### Effects of the Invention

As is clear from the above explanation, the processing time of the orthogonal transform process can be shortened since the one-dimensional orthogonal transform process can be performed horizontally without waiting for the one-dimensional orthogonal transform process to finish vertically for all of the image data in the order of the image data (Y0, Y1, Y2, Y3, Cb and Cr elements) in a macroblock for which the one-dimensional orthogonal transform process has finished vertically. Further, power consumption can be reduced by shortening the processing time of the present image encoding device. Additionally, image data which includes the luminance elements and the chrominance elements that make up the predetermined format can be processed by changing the amount of pixel data which makes up the image data, since the orthogonal transform process and the address generation unit for each designated block size, and the present image encoding device can be applied to various encoding standards.

Thus according to the present invention, the processing time for orthogonal transform processing can be shortened adaptively according to various format configurations and various block sizes, and further, now that various image encoding regulations have been popularized, the practical value for the present invention is markedly high since power consumption can be reduced by shortening processing time in the present image encoding device.

### Brief Description of Drawings

FIG. 1 is a structural diagram of the image encoding device for performing conventional two-dimensional orthogonal transform processing;
FIG. 2 is a diagram which shows a structural example of a storage area in the one port memory 940 for transposition processing as shown in FIG. 1;
FIG. 3 is a timing chart composed according to the execution of each unit in the image encoding device 900;
FIG. 4 is a block diagram which shows the structure of the image encoding device according to the first embodiment of the present invention;
FIG. 5 is a diagram which shows a structural example of storage areas A and B in the two port memory 20 for transposition processing as shown in FIG. 4;
FIG. 6 is a flowchart which shows functions of the processes executed by each unit of the image encoding device 1;
FIG. 7 is a timing chart according to the execution of each unit in the image encoding device 1;
FIG. 8 is a diagram which shows an address generation pattern for the first address generation unit 40 when the block size is 8x4 pixels;
FIG. 9 is a diagram which shows an address generation pattern for the first address generation unit 40 when the block size is 4 x 8 pixels;
FIG. 10 is a diagram which shows an address generation pattern for the first address generation unit 40 when the block size is 4 x 4 pixels; and
FIG. 11 is a block diagram which shows the structure of the image encoding device according to the second embodiment of the present invention.

### Numerical References

- 1, 2: Image encoding device
- 10: First one-dimensional orthogonal transform processing unit
- 20: Two port memory for transposition processing
- 30: Second one-dimensional orthogonal transform processing unit
- 40: First address generation unit
- 50: Second address generation unit
- 60: Coefficient table holding unit
- 61 through 64: Coefficient table
- 70: Parameter set storage unit
- 80: Control unit
- 90: One port memory for transposition processing

### Best Mode for Carrying Out the Invention

### (First Embodiment)

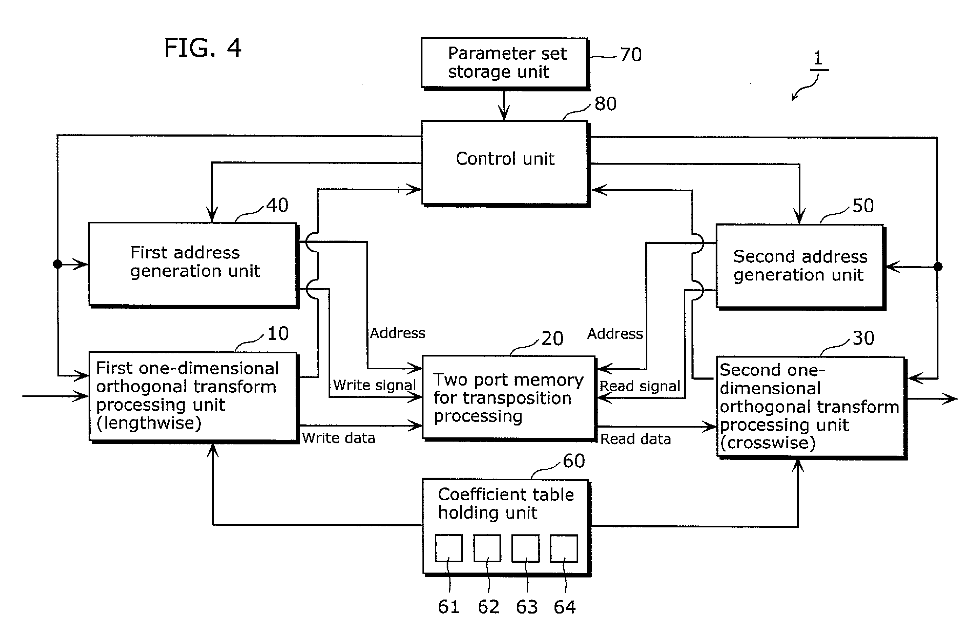

Below, an embodiment of the present invention is explained in detail using diagrams. FIG. 4 is a block diagram which shows a structure of the image encoding device according to the first embodiment of the present invention. Note that a subtractor, the entropy encoding unit and other units which compose the image encoding device are not pictured, and only the structure of the two-dimensional orthogonal transform unit is pictured.

As shown in FIG. 4, the image encoding device 1 includes a first one-dimensional orthogonal transform processing unit 10, a two port memory 20 for transposition processing, a second one-dimensional orthogonal transform unit 30, a first address generation unit 40, a second address generation unit 50, a coefficient table holding unit 60, a parameter set storage unit 70 and a control unit 80.

The coefficient table holding unit 60 holds the coefficient table 61 through 64 in advance for each predetermined size. The coefficient table 61 is for example a table for an 8 x 8 pixel block, the coefficient table 62 is for example a table for a 4 x 8 pixel block, the pixel 63 is for example a table for an 8x4 pixel block, and the coefficient table 64 is for example a table for a 4 x 4 block.

Note that coefficients according to each protocol such as MPEG-1, MPEG-2, MPEG-4 and H264AVC are stored in advance in the coefficient tables 61 through 64. Subsequently, when an image is coded with the predetermined standard, the image encoding device is configured such that DCT or another orthogonal transform can be processed by using (replacing coefficients in the predetermined standard) a coefficient matched to the predetermined standard by the first one-dimensional orthogonal transform processing unit 10 and the second one-dimensional orthogonal transform processing unit 30.

The parameter set storage unit 70 stores an inputted image data format configuration, a block size used for processing the image data and so on.

For example when the format configuration is 4:2:0 for an 8 x 8 pixel block is indicated by the control unit 80, the first one-dimensional orthogonal transform processing unit 10 performs the orthogonal transform process vertically on image data (Y0, Y1, Y2, Y3, Cb and Cr elements) divided into 64 bit blocks upon which a process has been performed based on the coefficient table 61.

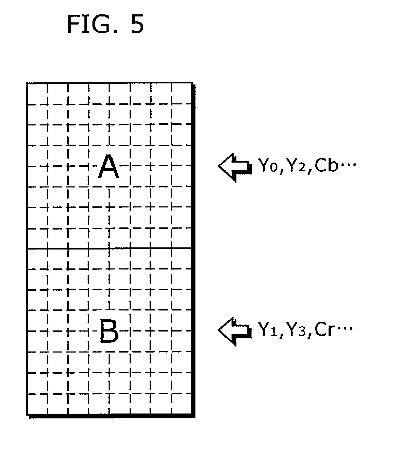

The two port memory 20 for transposition processing have storage areas A and B which store two 8 x 8 pixel blocks as shown in FIG. 5, and which mutually store the result processed by the first one-dimensional orthogonal transform processing unit 10 in the storage areas A and B. In other words, for example the Y0, Y2 and Cb elements are stored in the storage area A and the Y1, Y3 and Cr elements are stored in the storage area B.

The second one-dimensional orthogonal transform processing unit 30 performs the one-dimensional orthogonal transform process horizontally on the image elements from the two port memory 20 for transposition processing.

The first address generation unit 40 generates an address for writing the processing results for the first one-dimensional orthogonal transform processing unit 10 into the two port memory 20 for transposition processing.

The second address generation unit 50 generates an address for inputting image elements from the two port memory 20 for transposition processing to the second one-dimensional orthogonal transform processing unit 30.

The control unit 80 controls all together the first one-dimensional orthogonal transform processing unit 10, the second one-dimensional orthogonal transform processing unit 30, the first address generation unit 40 and the second address generation unit 50 based on the parameter setting stored in the parameter set storage unit 70. More specifically, the control unit 80 performs control such that the first one-dimensional orthogonal transform processing unit 101 and the second one-dimensional orthogonal transform processing unit 30 perform one-dimensional orthogonal transform processing for each block of the designated size, and such that the first address generation unit 40 and the second address generation unit 50 provide an address corresponding to the designated size to the two port memory 20 for transposition processing. Additionally, the control unit 80 controls the first address generation unit 40 and the second address generation unit 50 to provide and stop providing addresses based on the processing state of the first one-dimensional orthogonal transform processing unit 101 and the second one-dimensional orthogonal transform processing unit 30. Additionally, the control unit 80 controls the address generated by the second address generation unit 50 such that the address is the same as, or does not pass the address generated by the first address generation unit 40. Further, when the control unit 80 controls the address generated by the second one-dimensional orthogonal transform processing unit 30 such that the address does not pass the address generated by the first address generation unit 40, the control unit 80 stops the functions of the second address generation unit 50 and the second one-dimensional orthogonal transform processing unit 30.

Next, the processes executed by each unit of the image encoding device 1 are described.

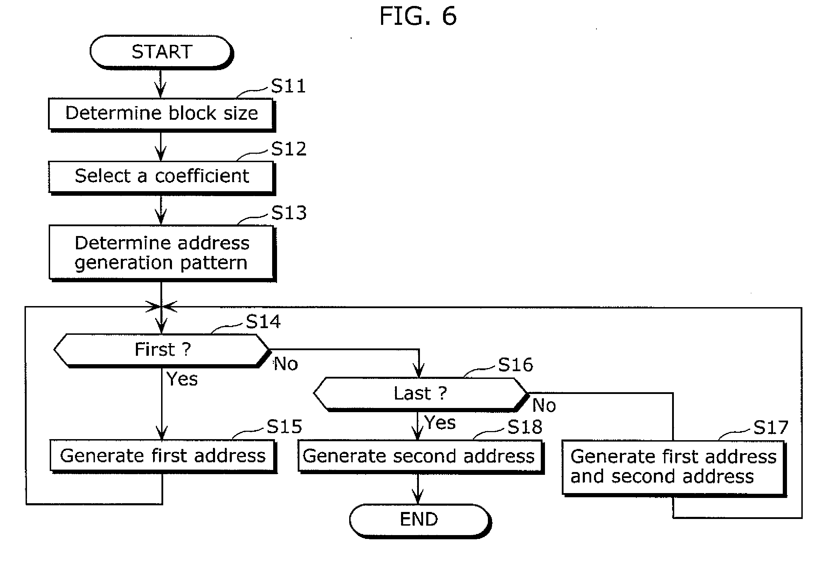

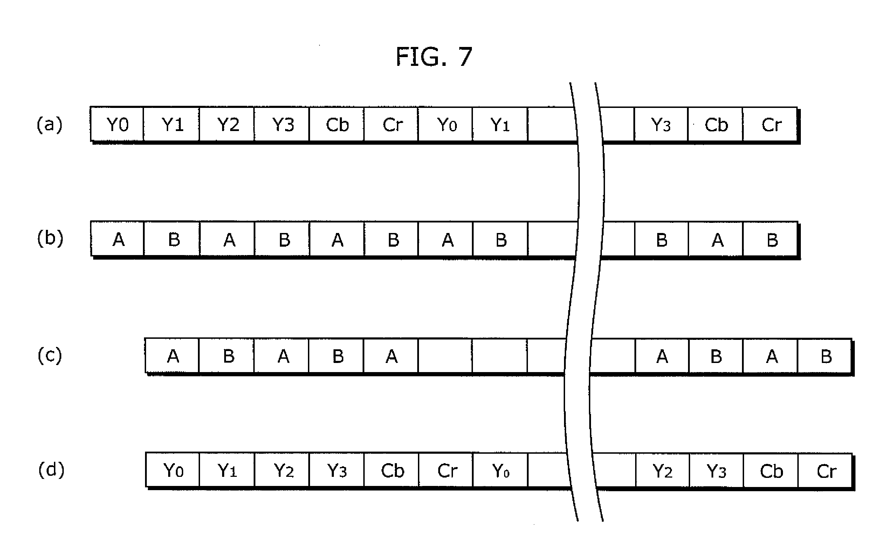

FIG. 6 is a flowchart which shows functions of the processes executed by each unit of the image encoding device 1, and FIG. 7 is a timing chart composed according to the execution of each unit in the image encoding device 1.

When starting a two-dimensional orthogonal transform process, the control unit 80 assesses the block size designated by the parameter setting (S11). Note that the assessment result is described as being made up of 8 x 8 pixel block sizes. Additionally, when performing the assessment, the control unit 80 assesses the format configuration designated by the parameter setting. This format configuration is described as the elements Y0, Y1, Y2, Y3, Cb and Cr at a ratio of 4:2:0.

When the assessment of the block size has finished, the control unit 80 determines a coefficient table to be used by the first one-dimensional orthogonal transform processing unit 10 and the second one-dimensional orthogonal transform process unit 30 (S12). Subsequently, the control unit 80 determines the address generation pattern (S13). For the 8 x 8 pixel block, the address generation pattern is more specifically a pattern which generates an address progressing 8 pixels at a time from the top left to the bottom and from the left side to the right side of the storage area A and B in the first address generation unit 40, and generates an address progressing 8 pixels at a time from the top left to the right and from the top side to the bottom side of the storage areas A and B.

When the address generation pattern determination is finished, the control unit 80 determines whether or not the orthogonal transform process is first or not for the first one-dimensional orthogonal transform processing unit 10 (S14). When the orthogonal transform process is first (Yes in S14), a first address is generated by the first address generation unit 40 (S15). Thus, the Y0 element generated by the first one-dimensional orthogonal transform process unit 10 (see FIG. 7(a)) is stored in the storage area A in the two port memory 20 for transposition processing (see FIG. 7(b)).

When the orthogonal transform process is not first (No in S14), the control unit 80 determines whether or not the orthogonal transform process is the last orthogonal transform process for the second one-dimensional orthogonal transform processing unit 30 (S16). When the orthogonal transform process is not the last (No in S16), the control unit 80 makes the first address generation unit 40 generate a first address and the second address generation unit 50 generate a second address (S17). Thus, for example the Y1 element generated by the first one-dimensional orthogonal transform processing unit 10 (see FIG. 7(a)) is stored in the storage area B of the two port memory 20 for transposition processing (see FIG. 7(b)), and the Y0 element stored in the storage area A of the two port memory 20 for transposition processing is read out (see FIG. 7(c)), and the orthogonal transform process is performed on the Y0 element by the second one-dimensional orthogonal transform processing unit 30 (see FIG. 7(d)). In other words, a pipeline process is performed. Note that it is pictured that there is no time delay in the process performed by the first one-dimensional orthogonal transform processing unit 10 and the process of writing the data into the two port memory 20 for transposition processing, and there is no time delay in reading out data from the two port memory 20 for transposition processing and in the process performed by the second one-dimensional orthogonal transform processing unit 30.

In this way, Step S17 is continuously performed until the last orthogonal transform process in the second one-dimensional orthogonal transform processing unit 30.

When the last orthogonal transform process in the second one-dimensional orthogonal transform processing unit 30 is performed (Yes in S16), the control unit 80 controls the address generation unit 50 to generate a second address (S18). Thus, a stored Cr element is read out of the storage area B in the two port memory 20 for transposition processing (see FIG. 7(c)), and an orthogonal transform process for the Cr element is performed by the second one-dimensional direct transform processing unit 30 (see FIG. 7(d)).

Thus, when the last orthogonal transform process in the second one-dimensional orthogonal transform processing unit 30 is performed, one series of image encoding processes has finished.

Thus according to the configuration above, the second one-dimensional orthogonal transform processing unit 30 processes data in the order of image data in small blocks (Y0, Y1, Y2, Y3, Cb and Cr elements) for which the first one-dimensional orthogonal transform processing unit 10 has finished one-dimensional orthogonal transform process vertically. The process performed by the second one-dimensional orthogonal transform processing unit 30 does not wait for the one-dimensional orthogonal transform for all small block image data to finish vertically. Thus, the processing time for the orthogonal transform process can be reduced since the second one-dimensional orthogonal transform processing unit 30 can perform the first orthogonal one-dimensional transform processing horizontally.

Note that the control unit 80 communicates the address generation timing to both the first address generation unit 40 and the second address generation unit 50 based on the processing state of the first one-dimensional orthogonal transform processing unit 101 and the second one-dimensional orthogonal transform processing unit 30. Thus, when writing is triggered simultaneously when reading data out of the two port memory 20 for transposition processing, there are cases where the vertical one-dimensional orthogonal transform process is interrupted due to some reason involving the first one-dimensional orthogonal transform processing unit 10, and data can no longer be written to the two port memory 20 for transposition processing, and the second one-dimensional transform processing unit 30 can no longer perform the horizontal orthogonal transform process. In such a case, read-out control of the two port memory 20 for transposition processing can be prevented from passing the writing control, since the control unit 80 recognizes the processing state of the first orthogonal one-dimensional transform processing unit 10 and controls the first address generation unit 40 and the second address generation unit 50.

Accordingly, inconsistency between the first one-dimensional orthogonal transform processing unit 10 and the second one-dimensional transform processing unit 30 can be prevented.

Note that when the second address generation unit 50 has effected passing control, and the second one-dimensional transform processing unit 30 must stop, there is a function to stop the entire circuit.

Additionally, when there is an increase or reduction in the amount of pixel data which makes up the inputted image data, in other words the block size, due to the image encoding standards, the image encoding process can be performed for a variety of sizes since the data can be processed by increasing or decreasing the amount of addresses generated by the first address generation unit 40 and the address generation device 25.

Note that there are 64 8 x 8 pixel data blocks which make up the image data in MPEG-1, 2 and 4 and there are two types of data blocks 64 8 x 8 pixels, and 16 4 x 4 pixels in H.264/AVC. Additionally, the amount of blocks for pixel data in other standards is 32 8x4 pixels blocks and 32 4 x 8 pixels blocks.

When there are 32 8x4 blocks, the orthogonal transform process is performed using a coefficient table 63 stored in for example a coefficient table holding unit 60 in the first one-dimensional orthogonal transform processing unit 10 and the second one-dimensional orthogonal transform processing unit 30, and an address is generated according to this orthogonal transform process by the first address generation unit 40 and the second address generation unit 50.

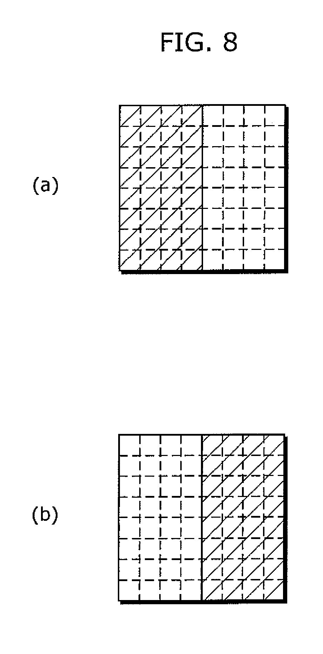

More specifically, the first address generation unit 40 generates an address for every 8 pixels proceeding from the top left to the bottom, and for every 4 pixels from the left side to the right side in the storage areas A and B (see FIG. 8 (a)), and next generates an address for every 8 pixels proceeding from the top left to the bottom, and for every 4 pixels from the left side to the right side of the storage areas A and B (see FIG. 8 (b)), and the second address generation unit 50 generates addresses in a pattern in which addresses are generated for every 4 pixels from the top left to right, and from the top side to the bottom side of the storage areas A and B, and next generates addresses every 4 pixels proceeding from the top left to the right, and from the top to the bottom of the storage area A and B.

When there are 32 4 x 8 blocks, the orthogonal transform process is performed using a coefficient table 62 stored in for example the coefficient table holding unit 60 in the first one-dimensional orthogonal transform processing unit 10 and the second one-dimensional orthogonal transform processing unit 30, and an address is generated according to this orthogonal transform process by the first address generation unit 40 and the second address generation unit 50.

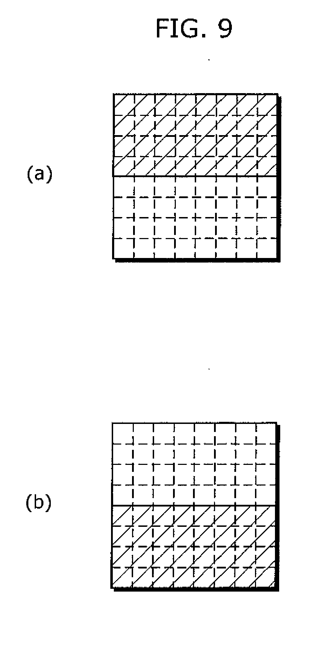

More specifically, the first address generation unit 40 generates an address for every 4 pixels proceeding from the top left to the bottom, and for every 8 pixels from the left side to the right side in the storage areas A and B (see FIG. 9 (a)), and next generates an address for every 4 pixels proceeding from the top left to the bottom, and for every 8 pixels from the left side to the right side of the storage areas A and B (see FIG. 9 (b)), and the second address generation unit 50 generates addresses in a pattern in which addresses are generated for every 8 pixels from the top left to right, and from the top side to the bottom side of the storage areas A and B, and next generates addresses every 8 pixels proceeding from the top left to the right, and from the top to the bottom of the storage area A and B.

When the amount of data is 4 x 4 blocks of 16 pixels, the orthogonal transform process is performed using a coefficient table 64 stored in for example the coefficient table holding unit 60 in the first one-dimensional orthogonal transform processing unit 10 and the second one-dimensional orthogonal transform processing unit 30, and an address is generated according to this orthogonal transform process by the first address generation unit 40 and the second address generation unit 50.

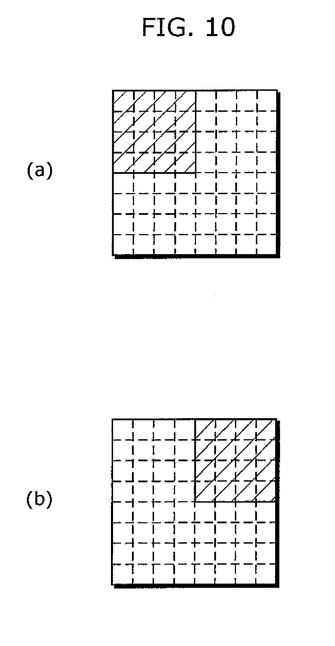

More specifically, the first address generation unit 40 generates an address for every 4 pixels proceeding from the top left to the bottom, and for every 4 pixels from the left side to the right side in the storage areas A and B (see FIG. 10 (a)), and next generates an address for every 4 pixels proceeding from the top left to the bottom, and for every 4 pixels from the left side to the right side of the storage areas A and B (see FIG. 10 (b)), and the second address generation unit 50 generates addresses in a pattern in which addresses are generated for every 4 pixels from the top left to the right, and from the top side to the bottom side of the storage areas A and B, and next generates addresses every 4 pixels proceeding from the top left to the right, and from the top to the bottom of the storage area A and B.

Additionally, a 4:2:0 format configuration has been described above and it goes without saying that the present invention can be applied to other formats such as 4:4:4.

Additionally, the present invention has been explained for a moving image, but can be applied to four JPEG format configurations, which are still image encoding standards.

### (Second Embodiment)

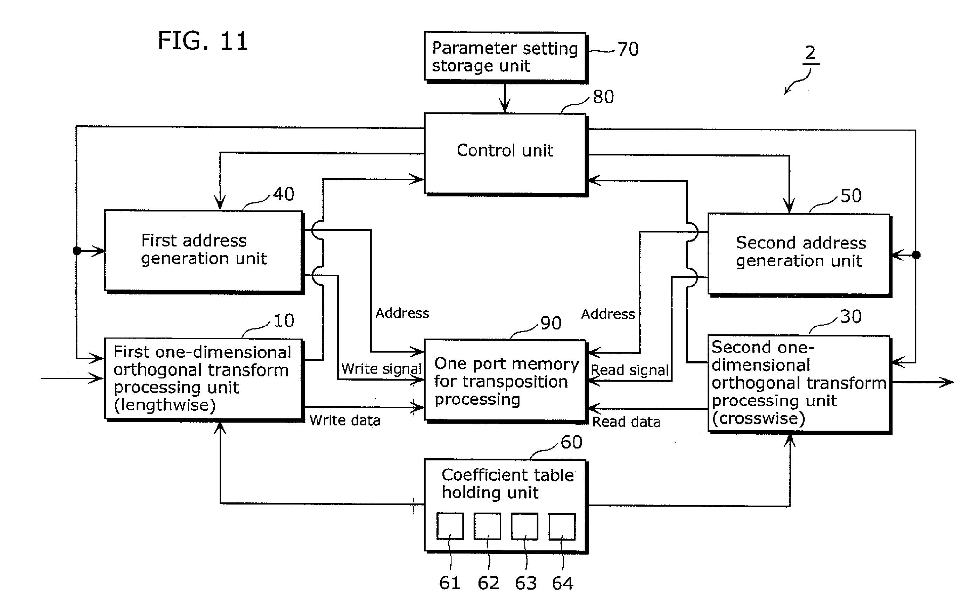

FIG. 11 is a block diagram which shows the structure of the image encoding device according to the second embodiment of the present invention. Note that a subtractor, an entropy encoding unit and other units which comprise the image encoding device are not pictured in the diagram, and only the structure of the two-dimensional orthogonal transform unit is pictured. Additionally, the same numbers are attached to parts corresponding to the image encoding device 1 in the first embodiment, and the explanations are not repeated.

As shown in FIG. 11, in addition to the one port memory 20 for transposition processing in the image encoding device 1, the image encoding device 2 differs from the image encoding device 1 in that the image encoding device 1 includes one port memory 90 for transposition processing configured to have the two port memory for transposition processing in 2 memory banks which can store a coefficient value in 1 block for the largest block (8 x 8 block) of the predetermined size.

In this case, the control unit 80 may control switching for each macroblock element basis, in other words for a predetermined block size basis. More specifically, in the same way as data is written from the first one-dimensional orthogonal transform processing unit 10 to one port memory having a bank A, and data is extracted from the second one-dimensional orthogonal transform processing unit 30 to the one port memory, the control unit 80 may perform control in order to mutually switch the memory banks by switching the one port memory 90 for transposition processing.

Thus, pipeline processing can be performed in the same way as the two port memory 20 for transposition processing. One-dimensional orthogonal transform processing can be performed horizontally without waiting for all image data in the macroblock for which vertical one-dimensional orthogonal transform process has finished (Y0, Y1, Y2, Y3, Cb and Cr elements) to finish the one-dimensional orthogonal transform process vertically in sequence. Thus, processing time for the orthogonal transform processing can be shortened. Further, power consumption can be reduced by shortening the processing time of the present image encoding device. Additionally, image data which includes the luminance elements and the chrominance elements which make up a predetermined format can be processed by changing the amount of pixel data which makes up the image data, and the amount of pixel data can be made compatible with a variety of encoding standards since the orthogonal transform process and the address generation is managed for each designated block size.

Note that the order of the first one-dimensional orthogonal transform processing unit 10 and the second one-dimensional transform processing unit 30 can be interchanged and then implemented. In other words, an image decoding device and an image decoding method can be implemented.

### Industrial Applicability

The image encoding device and method according to the present embodiment can be implemented in an image encoding device which corresponds to each type of MPEG-1, MPEG-2, MPEG-4, H.264/AVC, JPEG and so on, and by reducing the orthogonal transform processing time, can improve processing efficiency, reduce power consumption, and can apply the image encoding method to various AV equipment such as a recorder or a cellular phone which include an image encoding device.

## Claims

1. An image encoding device which performs an orthogonal transform process, for each block of a designated size, on image data which includes luminance elements and chrominance elements formed in a predetermined format, said image encoding device comprising:
a coefficient table holding unit operable to hold a coefficient table in advance for each predetermined block size;
a first orthogonal transform processing unit operable to perform a one-dimensional orthogonal transform process vertically on each block of the data, which includes the luminance elements and the chrominance elements, based on the coefficient table corresponding to the designated block size;
a data transposition process memory which includes a storage area in which can be recorded in two blocks a coefficient value for the largest block on which the one-dimensional orthogonal transform process is performed by said first orthogonal transform processing unit;
a first address generation unit operable to generate an address in said data transposition process memory such that the coefficient value of a designated size on which the one-dimensional orthogonal transform process has been performed by said first orthogonal transform processing unit is transposed and recorded into one of the storage areas;
a second address generation unit operable to generate an address in said data transposition process memory so as to read out the coefficient value of the designated size stored in one of the storage areas of said data transposition process memory;
a second orthogonal transform processing unit operable to perform a one-dimensional orthogonal transform process horizontally on the coefficient value of the designated size, read out of said data transposition process memory, based on the coefficient table corresponding to the designated block size; and
a control unit operable to control said first and said second orthogonal transform processing unit to perform the one-dimensional transform processing in parallel for each block of the designated size, and to control said first and said second address generation units to supply an address which corresponds to the designated size in parallel with said data transposition process memory.

2. The image encoding device according to Claim 1,
wherein said data transposition process memory includes two ports which can write data from said first orthogonal transform processing unit and read out data to said second orthogonal transform processing unit in parallel, and
said control unit is operable to control supply and stopping supply of the addresses by said first and second address generation units based on a processing state of said first and second orthogonal transform processing units.

3. The image encoding device according to Claim 2,
wherein said control unit is operable to control the address generated by said second address generation unit to be the same as or to not pass the address generated by said first address generation unit.

4. The image encoding device according to Claim 3,
wherein said control unit is operable to control said second address generation unit and said second orthogonal transform processing unit to stop functioning when said control unit controls the address generated by said second address generation unit so as not to pass the address generated by said first address generation unit.

5. The image encoding device according to Claim 1,
wherein there are six luminance elements and chrominance elements defined in the MPEG moving image encoding standards, and four luminance elements and chrominance elements in the JPEG still image encoding standards.

6. The image encoding device according to Claim 1,
wherein the number of pixels in the designated size is 64, which make up a block of 8 pixels x 8 pixels in the moving image encoding standards MPEG-1 and 2.

7. The image encoding device according to Claim 1,
wherein the number of pixels in the designated size is 16, which make up a 4 pixel x 4 pixel block in the moving image encoding standards MPEG-4 AVC.

8. The image encoding device according to Claim 2,
wherein said data transposition process memory is made up to include one port memory that includes two memory banks which can store in one block the coefficient value for the largest block of the predetermined size, and
said control unit is operable to control switching the memory banks for the one port memory.

9. The image encoding device according to Claim 8,
wherein said control unit is operable to switch the bank for the one port memory on a block basis of the designated size.

10. The image encoding device according to Claim 1,
wherein a coefficient corresponding to each standard is stored respectively in advance in the coefficient table for each predetermined size of said coefficient table holding unit, and
said first and second one-dimensional orthogonal transform processing units are operable to use a coefficient matched to a predetermined standard.

11. An image encoding method for performing an orthogonal transform process, for each block of a designated size, on image data which includes luminance elements and chrominance elements formed in a predetermined format, said image encoding method comprising:
a coefficient table holding step for holding a coefficient table in advance for each predetermined block size;
a first orthogonal transform processing step for performing a one-dimensional orthogonal transform process vertically on each block of the data, which includes the luminance elements and the chrominance elements, based on the coefficient table corresponding to the designated block size;
a first address generation step for generating an address in a data transposition process memory which includes a storage area in which a coefficient value for the largest block on which the one-dimensional orthogonal transform process is performed by said first orthogonal transform processing unit can be recorded in two blocks such that the coefficient value of a designated size on which the one-dimensional orthogonal transform process has been performed by said first orthogonal transform processing unit is transposed and recorded into one of the storage areas;
a second address generation step for generating an address in said data transposition process memory so as to read out the coefficient value of the designated size stored in one of the storage areas of said data transposition process memory;
a second orthogonal transform processing step for performing a one-dimensional orthogonal transform process horizontally on the coefficient value of the designated size, read out of said data transposition process memory, based on the coefficient table corresponding to the designated block size; and
a control unit for controlling said first and said second orthogonal transform processing unit for performing the one-dimensional transform processing in parallel for each block of the designated size, and to control said first and said second address generation units to supply an address which corresponds to the designated size in parallel with said data transposition process memory.

12. A computer program product, which, when loaded into a computer, allows a computer to execute the steps included in the image encoding method according to Claim 11.
